# EUROPÄISCHE PATENTSCHRIFT

(11) **EP 0 531 721 B1**
(45) Veröffentlichungstag und Bekanntmachung des Hinweises auf die Patenterteilung: **26.07.1995**
(21) Anmeldenummer: 92113559.6
(22) Anmeldetag: 08.08.1992
(51) Int. Cl.: B60T 13/74

(54) **Antriebsstrang mit Wirbelstrombremse in einem Kraftfahrzeug**
Derive train with an Eddy current brake in a motor vehicle
Arbre de transmission avec frein à courant de Foucault dans un véhicule automobile

(30) Priorität: 13.09.1991 DE 4130504
(43) Veröffentlichungstag der Anmeldung: 17.03.1993
(73) Patentinhaber: MAN Nutzfahrzeuge Aktiengesellschaft, 80976 München (DE)
(72) Erfinder: Kozel, Peter, Dipl.-Ing., W-8063 Odelzhausen (DE); Tradt, Alexander, W-8000 München 40 (DE); Feitzelmayer, Karl, Dipl.-Ing., W-8038 Gröbenzell (DE)

(56) Entgegenhaltungen:
- DE-A- 3 617 486
- DE-C- 947 398
- PATENT ABSTRACTS OF JAPAN vol. 13, no. 189 (M-821)8. Mai 1989 & JP-A 10 16 202

## Beschreibung

Die Erfindung bezieht sich auf einen zwischen den Rahmenlängsträgern in Kraftfahrzeugen, insbesondere Nutzfahrzeugen, angeordneten Antriebsstrang, mit im wesentlichen einem Verbrennungsmotor, einem Schaltgetriebe und einer elektromagnetischen Wirbelstrombremse und die Rahmenlängsträger mit den in ihnen verlegten elektrischen Leitungen abdeckenden Abschirmblechen.

Bei Fahrzeugen die mit elektromagnetischen Wirbelstrombremsen ausgestattet sind, besteht die Gefahr, daß die in den Rahmenlängsträgern verlegten Kunststoffleitungen für Bremse und Elektrik durch die beim Betrieb der Bremse entstehende Hitzeeinwirkung infolge Strahlungswärme und Konvektion geschädigt werden. Die beim Betrieb der Wirbelstrombremse entstehende Luftströmung wird direkt auf die im Rahmen verlegten Kunststoffleitungen geblasen. Bisher bekannt gewordene Abdeckungen für die zu schützenden Leitungen waren lediglich im Inneren des U-Rahmenlängsträgers verlegt, wobei sich herausgestellt hat, daß diese nicht wirksam genug waren und auch zu aufwendig hinsichtlich Montage und Kosten.

Der Erfindung liegt die Aufgabe zugrunde, eine wirksamere Schutzeinrichtung für die in den Rahmenlängsträgern verlegten Kunststoffleitungen zu schaffen.

Dies wird erfindungsgemäß dadurch erreicht, daß an beiden Seiten der Wirbelstrombremse und im Abstand zu dieser die Rahmenträger in ihrer Höhenabmessung überragende Abschirmbleche vorgesehen sind. Solcherart wird der heiße Luftstrom nach unten und oben abgelenkt und in Zusammenwirken mit den Merkmalen des Anspruches 2 kann die vom Fahrtwind bzw. vom Kühlgebläse des Motors erzeugte kühlere Luft zwischen der rahmenseitigen Abdeckung und der Abdeckung der Wirbelstrombremse vorbeistreichen. Dies hat eine ausgezeichnete Isolierwirkung zur Folge und vermeidet zu hohe Temperaturen an den empfindlichen Kunststoffleitungen.

Nach einem weiteren Merkmal der Erfindung sind die Abschirmbleche der Wirbelstrombremse als Winkelbleche ausgebildet, die mit ihren kurzen Schenkeln an der Stirnseite des Stators der Wirbelstrombremse befestigt sind. Auf diese Weise wird vermieden, daß rotorwarme Luft auf das Schaltgetriebe geblasen wird.

Gemäß einer vorteilhaften Ausgestaltung der Erfindung sind die rahmenseitigen Abschirmbleche mittels innenwärts gerichteter Luftleitbleche verbunden, die in schräger Anstellung zur Abtriebswelle angeordnet sind. Damit sind Ventile und andere Regel- und Steuerorgane, die in einem gewissen Abstand von der Wirbelstrombremse am Rahmenlängsträger angeordnet sein können , von einer Beeinträchtigung durch Luftströmungen geschützt, indem diese an den Leitblechen umgeleitet werden.

Die Erfindung ist in einem Ausführungsbeispiel dargestellt und beschrieben.

Es zeigen:
- Fig. 1: ein partieller Ausschnitt des Antriebsstranges mit Wirbelstrombremse in der Draufsicht,
- Fig. 2: eine Hinteransicht der Wirbelstrombremse mit den ihr zugeordneten Abdeckungen.

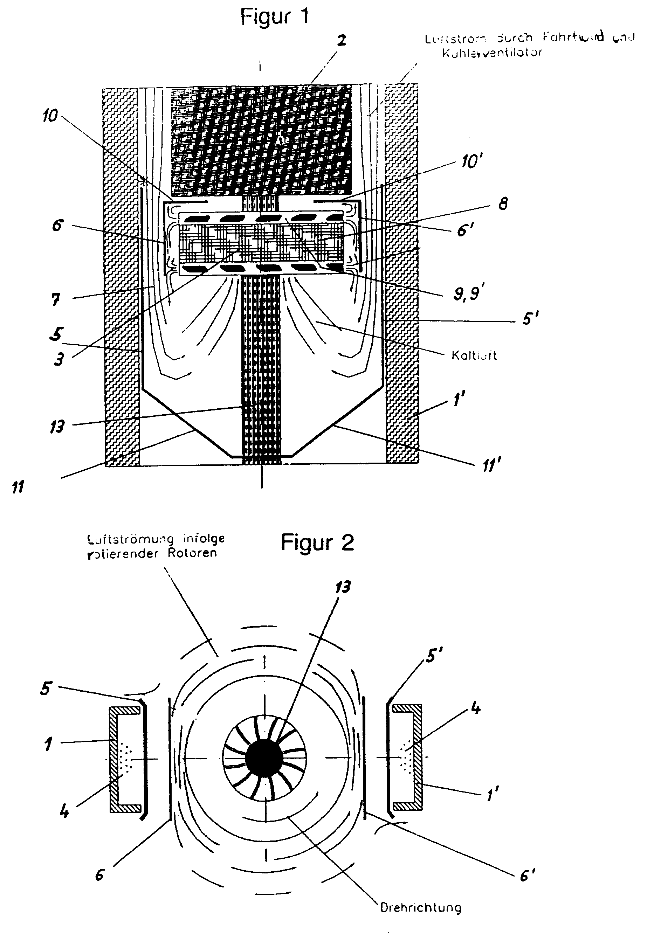

Fig. 1 zeigt die Rahmenträger 1 und 1', zwischen denen ein Antriebsstrang angeordnet ist. Der Antriebsstrang geht aus von einem nicht gezeigten Verbrennungsmotor, an dem ein Schaltgetriebe 2 angeschlossen ist, an dessen Ausgang eine elektromagnetische Wirbelstrombremse 3 angeordnet ist. Diese weist einen Stator 8 und zwei Rotoren 9 und 9' auf. Beiderseits der Wirbelstrombremse 3 sind Abschirmbleche 6, 6' angeordnet, die in ihrer Höhenabmessung die Rahmenlängsträger 1 und 1' überragen. Die Abschirmbleche 6, 6' können winkelförmig ausgebildet sein, wobei dann die kurzen Schenkel (10, 10') an der vorderen Seite des Stators 8 der Wirbelstrombremse befestigt sind. Die in den Rahmenlängsträgern 1, 1' einliegenden Kunststoffleitungen 4 für Elektrik und Bremse werden durch Abschirmbleche 5, 5' abgedeckt, die zusammen mit den Abschirmblechen 6, 6' Luftführungskanäle 7 bilden, durch die vom Fahrtwind bzw. vom Kühlgebläse des Motors erzeugte kühlere Luft geblasen wird. Solcherart wird der Raum der Kunststoffleitungen 4 erheblich gekühlt, und weiterhin wird die durch die Wirbelstrombremse erzeugte heiße Luft nach unten und oben weggeführt. Die Abschirmbleche 5, 5' sind durch schräg angestellte Luftleitbleche 11, 11' miteinander verbunden.

Aus der Fig. 2 ist sehr deutlich zu erkennen, wie die infolge der rotierenden Teile der Wirbelstrombremse erzeugte Luftströmung durch die Abschirmbleche 6, 6' über und unter die Rahmenlängsträger 1, 1' hinweggeführt wird.

### Bezugszeichenliste

- 1, 1': Rahmenlängsträger
- 2: Schaltgetriebe
- 3: elektromagnetische Wirbelstrombremse
- 4: elektrische Leitungen
- 5, 5': Abschirmbleche
- 6, 6': Abschirmbleche
- 7: Luftführungskanal
- 8: Stator von 3
- 9, 9': Rotoren von 3
- 10, 10': kurze Schenkel von 6, 6'
- 11, 11': Luftleitbleche
- 13: Abtriebswelle (Gelenkwelle)

## Patentansprüche

1. Zwischen den Rahmenlängsträgern in Kraftfahrzeugen, insbesondere Nutzfahrzeugen, angeordneter Antriebsstrang, mit im wesentlichen einem Verbrennungsmotor, einem Schaltgetriebe und einer elektromagnetischen Wirbelstrombremse und die Rahmenlängsträger mit den in ihnen verlegten elektrischen Leitungen abdeckenden Abschirmblechen, dadurchgekennzeichnet, daß an beiden Seiten der Wirbelstrombremse (3) und im Abstand zu dieser die Rahmenlängsträger (1, 1') in ihrer Höhenabmessung überragende Abschirmbleche (6, 6') vorgesehen sind.

2. Antriebsstrang nach Anspruch 1, dadurch gekennzeichnet, daß die die Wirbelstrombremse (3) abdeckenden Bleche (6, 6') zusammen mit den die elektrischen Leitungen (4) in den U-förmigen Rahmenlängsträgern (1, 1') abdeckenden Bleche (5, 5') einen Luftführungskanal (7) für den von dem Kühlerventilator erzeugten Luftstrom und den Fahrtwind bilden.

3. Antriebsstrang nach Anspruch 1 oder 2, dadurch gekennzeichnet, daß die die Wirbelstrombremse (3) abdeckenden Abschirmbleche (6, 6') als Winkelbleche ausgebildet und mit ihren kurzen Schenkeln (10, 10') an der Stirnseite des Stators (8) der Wirbelstrombremse (3) befestigt sind.

4. Antriebsstrang nach den Ansprüchen 1 bis 3, dadurch gekennzeichnet, daß die rahmenabdeckenden Abschirmbleche (5, 5') mittels innenwärts gerichteter Luftleitbleche (11, 11') verbunden sind, die in schräger Anstellung zur Abtriebswelle (13) angeordnet sind.

5. Antriebsstrang nach einem oder mehreren der Ansprüche 1 bis 4, dadurch gekennzeichnet, daß die rahmenabdeckenden Abschirmbleche (5, 5') doppelwandig ausgebildet sind.

6. Antriebsstrang nach einem oder mehreren der Ansprüche 1 bis 5, dadurch gekennzeichnet, daß die rahmenabdeckenden Abschirmbleche (5, 5') vor den U-förmigen Rahmenlängsträgern (1, 1') angeordnet sind und in ihrer Höhenabmessung mit der Rahmenlängsträgerkante abschließen oder diese überragen.

7. Antriebsstrang nach Anspruch 6, dadurch gekennzeichnet, daß die rahmenabdeckenden Abschirmbleche (5, 5') an ihren freien Enden abgewinkelt sind.

## Claims

1. Drive train between the frame longitudinal members in motor vehicles, particularly commercial vehicles, basically with an internal combustion engine, a manual gearbox, an electromagnetic eddy-current brake and screen plates covering the frame longitudinal members and the electrical cables laid in the said longitudinal members, characterised in that on both sides of the eddy-current brake (3) and at a distance to it screen plates (6, 6') are provided whose vertical dimension is larger than that of the frame longitudinal members (1, 1').

2. Drive train according to Claim 1, characterised in that the plates (6, 6') covering the eddy-current brake (3) together with the plates (5, 5') covering the electrical cables (4) in the U-shaped frame longitudinal members (1, 1') form an air conduction channel (7) for the air stream generated by the radiator fan and the headwind.

3. Drive train according to Claim 1 or 2, characterised in that screen plates (6, 6') covering the eddy-current brake (3) are designed as angular plates whose short sides (10, 10') are attached to the front side of the stator (8) of the eddy-current brake (3).

4. Drive train according to the Claims 1 to 3, characterised in that the screen plates (5, 5') covering the frame are connected with each other by means of air deflectors aligned inwards and arranged at an oblique angle relative to the output shaft (13).

5. Drive train according to one or several of the Claims 1 to 4, characterised in that the screen plates (5, 5') covering the frame are double-walled.

6. Drive train according to one or several of the Claims 1 to 5, characterised in that the screen plates (5, 5') covering the frame are arranged before the U-shaped frame longitudinal members (1, 1') and, in respect of their vertical dimension, either end flush with the frame longitudinal member edge or rise above it.

7. Drive train according to Claim 6, characterised in that the free ends of the screen plates (5, 5') covering the frame are angled.

## Revendications

1. Transmission logée entre les longerons du châssis d'un véhicule à moteur notamment d'un véhicule utilitaire, comprenant essentiellement un moteur à combustion interne, une boîte de vitesses et un frein électromagnétique à courants de Foucault, les longerons étant munis de tôles de protection recouvrant les câbles électriques placés dans les longerons, caractérisée par des tôles de protection (6, 6') des deux côtés du frein à courante de Foucault (3) et à une distance de celui-ci, qui dépassent la hauteur des longerons (1, 1').

2. Transmission selon la revendication 1, caractérisée en ce que les tôles (6, 6') recouvrant le frein à courants de Foucault (3) ainsi que les tôles (5, 5') qui recouvrent les conducteurs électriques (4) des longerons (1, 1') en forme de U constituent un canal de guidage d'air (7) pour l'air de circulation créé par le ventilateur de refroidissement et par le vent du déplacement.

3. Transmission selon la revendication 1 ou 2, caractérisée en ce que les tôles de protection (6, 6') qui recouvrent le frein à courants de Foucault (3) sont des tôles pliées dont les branches les plus courtes (10, 10') sont fixées contre la face avant du stator (8) du frein à courants de Foucault (3).

4. Transmission selon les revendications 1 à 3, caractérisée en ce que les tôles de protection (5, 5') qui couvrent le châssis sont reliées à des tôles de guidage d'air (11, 11') dirigées vers l'intérieur et qui sont disposées en biais par rapport à l'arbre de transmission (13).

5. Transmission selon l'une ou plusieurs des revendications 1 à 4, caractérisée en ce que les tôles de protection (5, 5') qui recouvrent le châssis sont des tôles à double paroi.

6. Transmission selon une ou plusieurs des revendications 1 à 6, caractérisée en ce que les tôles de protection (5, 5') recouvrant le châssis sont placées devant les longerons (1,1') en forme de U du châssis et ferment ou dépassent les longerons en hauteur.

7. Transmission selon la revendication 6, caractérisée en ce que les tôles de protection (5, 5') recouvrant le châssis sont pliées à leur extrémité libre.
